# EUROPEAN PATENT APPLICATION

(11) **EP 0 722 239 A2**
(43) Date of publication of application: **17.07.1996**
(21) Application number: 96100183.1
(22) Date of filing: 08.01.1996
(51) Int. Cl.: H04L 29/06

(54) **Data communication method and apparatus for requesting and responding to information**

(30) Priority: 11.01.1995 JP 18686/95
(71) Applicant: VICTOR COMPANY OF JAPAN, LIMITED, Kanagawa-ku Yokohama (JP)
(72) Inventor: Ando, Ichiro, Yokosuka-shi, Kanagawa-ken (JP)
(74) Representative: Finsterwald, Martin, Dr.

(57) **Abstract**

Primary communication data M1, M2, M3, ---, given to a user by radio transmission 16, 18, 22, 24 or reproduction from a recording medium 19, are multiplexed in advance with corresponding request/response control information R1, R2, R3,---. The request/response control information comprises network address information of an information provider 44 to whom a user can request or respond regarding the content of the provided primary communication data M1, M2, M3, ---. At a receiving or reproduction apparatus 20, 20A, the request/response control information R1, R2, R3,--- are separated from the primary communication data M1, M2, M3,---by separator 28 and stored in memory 38. When the user enters a predetermined command signal through input device 40 to perform a request/response processing to a selected information provider 44, a line is connected to the intended information provider 44 via modem 34 and network 42 based on the stored control information, and then the user is allowed to request or respond to the information based on the control information.

## Description

### BACKGROUND OF THE INVENTION

### 1. Field of the Invention:

The present invention generally relates to a data communication method for requesting and responding to information (information provider) and related data receiving apparatus and reproduction apparatus, and more particularly to a data communication method for allowing users to easily request and respond to the information available through broadcasting services or recording media.

### 2. Prior Art:

To allow users to request and respond to information provided through data communication, there is known a method for adding request/response control information to primary communication data in the recording or transmission of these communication data, so as to let the users recognize or remember the request/response control information when they reproduce or receive the communication data, thereby allowing the users to spontaneously execute the request or response processing.

For example, in the TV shopping services, it will be possible to transmit dealers' telephone numbers, ordering hours and other information as well as the explanation for merchandised goods as additional or supplemental information in the form of sound or video signals. Users can recognize and remember these additional or supplemental information, and will make a telephone call to-contact an intended information provider and place an order as occasion demands.

However, according to the above-described conventional method, there is a problem that users are forced to correctly recognize, remember and execute the required request/response processing on their own responsibility, including the procedure for the request and response as well as acknowledged rights for the request/response processing and costs incurred from such processing. In short, the conventional communication data receiving or reproduction apparatus has a function of solely transmitting the information to users in a unidirectional manner, without providing any means for aiding the users to respond to the information provider.

### SUMMARY OF THE INVENTION

In view of the above-described problems encountered in the prior art, the present invention has a principal object to provide an excellent request/response method for interactive data communication and related data receiving and reproduction apparatus capable of providing users easy access to request and respond to the information provider even if the users do not correctly recognize, remember and execute the required request/response processing, including the procedure for the request and response as well as acknowledged rights for the request/response processing and costs incurred from such processing.

In order to accomplish the above-described and other related objects, the present invention combines the primary communication data with corresponding request/response control information including at least network addresses of information providers in the recording or transmission of communication data. Then, the present invention lets users utilize such request/response control information anytime in the reproduction or reception of the communication data if users want to respond or request to the information provided.

Thus, by the aid of the request/response control information available anytime, the users can easily and correctly connect a line to the network address of the intended information provider and execute the required request/respond processing for getting the intended communication objects such as merchandised goods.

More specifically, one aspect of the present invention provides a data communication method for requesting and responding to information comprising: a step of forming a communication data given to a user by transmission or reproduction from a recording medium, the communication data being a combination of request/response control information and primary communication data, the request/response control information comprising information relating to network address of an information provider to whom the user can request or respond regarding the content of the primary communication data; a step of separating the request/response control information from the primary communication data when the communication signal is received or reproduced; a step of storing the separated request/response control information; a step of connecting a line to the network address of the information provider using the stored request/response control information in response to a predetermined command signal entered by the user through an input means to request or respond to the information provider; and a step of allowing the user to request or respond to the information provider using the stored request/response control information after the line is connected to the information provider.

Furthermore, another aspect of the present invention provides a receiving apparatus for receiving a communication signal given to a user by transmission, the communication signal being a combination of primary communication data and request/response control information, the request/response control information comprising information relating to network address of an information provider to whom the user can request or respond regarding the content of the primary communication data, the receiving apparatus comprising: separating means for separating the request/response control information from the primary communication data when the communication signal is received; memory means for storing the separated request/response control information; input means for allowing the user to enter a predetermined command signal for requesting or responding to the information provider; network control means for reading out the request/response control information from the memory means and connecting a line to the network address of the information provider using the readout request/response control information in response to the predetermined command signal entered through the input means; and request/response means for allowing the user to request or respond to the information provider using the stored request/response control information after the line is connected to the information provider.

Moreover, still another aspect of the present invention provides a reproduction apparatus for reproducing a communication signal given to a user through reproduction from a recording medium, the communication signal being a combination of primary communication data and request/response control information, the request/response control information comprising information relating to network address of an information provider to whom the user can request or respond regarding the content of the primary communication data, the reproduction apparatus comprising: separating means for separating the request/response control information from the primary communication data when the communication signal is reproduced; memory means for storing the separated request/response control information; input means for allowing the user to enter a predetermined command signal for requesting or responding to the information provider; network control means for reading out the request/response control information from the memory means and connecting a line to the network address of the information provider using the readout request/response control information in response to the predetermined command signal entered through the input means; and request/response means for allowing the user to request or respond to the information provider using the stored request/response control information after the line is connected to the information provider.

Besides the network address information of the information provider to whom the user executes the request/response processing, the request/response control information can comprise at least one information selected from the group consisting of procedure information for a request/response processing, rights information for the request/response processing, cost information incurred from the request/response processing, display information regarding permission or notice to user's request/response, and display information for instructing users to execute the request/response processing. Providing such control information makes it possible for the user to realize a fine and accurate communication data processing in the reproduction or reception of communication data taking account of characteristics of each requirement or response by connecting the network line to the intended information provider and executing the required request/response processing based on such detailed information.

Furthermore, the request/response control information can comprise a plurality of network addresses of information providers required in each request/response processing. In accordance with these request/response control information, the user can select a most preferable one among the plural network addresses in the reproduction or reception of communication data, and connect a line to the network address of the selected information provider, and execute the required request/response processing. Hence, it becomes possible to adaptively select a specific information provider from the listed numerous providers, thereby reducing the costs for using the network and administrating individual requests and responses in accordance with their purposes.

### BRIEF DESCRIPTION OF THE DRAWINGS

The above and other objects, features and advantages of the present invention will become more apparent from the following detailed description which is to be read in conjunction with the accompanying drawings, in which:
Fig. 1 is a block diagram showing a preferable embodiment of a data communication system including a transmitting apparatus and a receiving apparatus, which is capable of realizing the information request/response method of the present invention;
Fig. 2 is a flow chart showing a first half of an operation of CPU executed in accordance with the first embodiment shown in Fig. 1 of the present invention;
Fig. 3 is a flow chart showing a second half of the operation of CPU executed in accordance with the first embodiment shown in Fig. 1 of the present invention;
Fig. 4 is a block diagram showing another preferable embodiment of a data communication system including a recording media manufacturer and a reproduction apparatus, which is also capable of realizing the information request/response method of the present invention;
Fig. 5 is a flow chart showing a first half of an operation of CPU executed in accordance with the second embodiment shown in Fig. 4 of the present invention;
Fig. 6 is a flow chart showing a second half of the operation of CPU executed in accordance with the second embodiment shown in Fig. 4 of the present invention;
Figs. 7A through 7C are views showing models of data arrangement used in each embodiment of the present invention, for multiplexing primary communication data with request/response control information; and
Fig. 8 is a view showing a recording format used in the second embodiment shown in Fig. 2 of the present invention, for memorizing the primary communication data and the request/response control information into a recording medium.

### DETAILED DESCRIPTION OF THE PREFERRED EMBODIMENTS

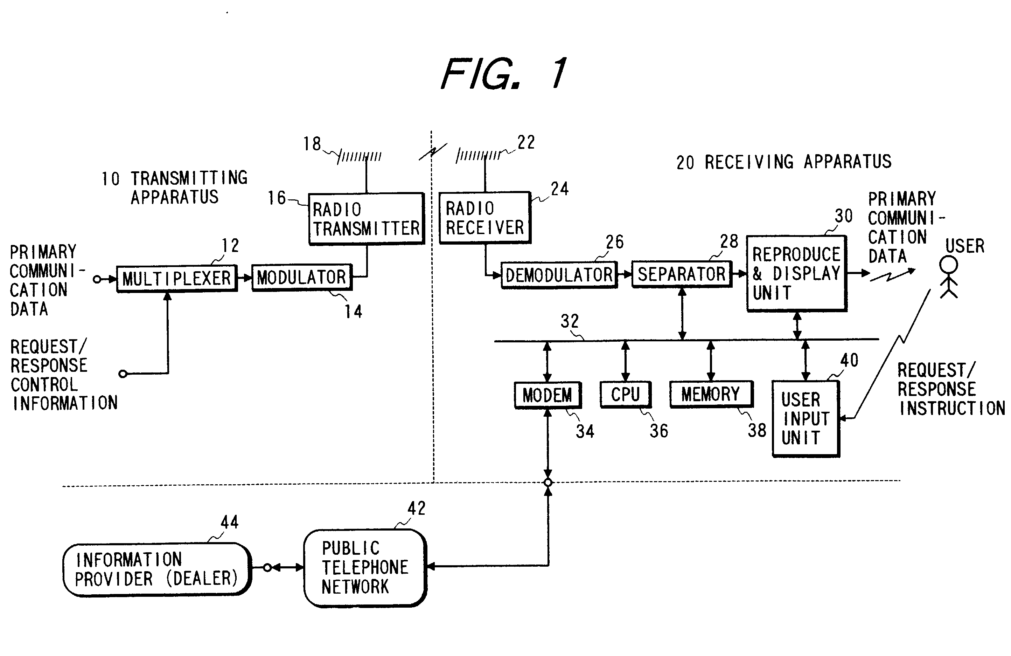

Preferred embodiments of the present invention for realizing an excellent information request/response method and providing related data receiving apparatus and reproduction apparatus will be explained in greater detail hereinafter, with reference to the accompanying drawings. Identical parts are denoted by identical reference numerals throughout the views. Fig. 1 is a block diagram showing a schematic arrangement of a preferable data communication system embodying the excellent information request/response method in accordance with the first embodiment of the present invention, which is divided into a transmitting apparatus 10 and a receiving apparatus 20.

The transmitting apparatus 10 comprises a multiplexer 12 which multiplexes primary communication data with request/response control information including at least network addresses of plural information providers. The transmission data, thus multiplexed in the multiplexer 12, are sent to modulator 14 wherein these transmission data are put error-correcting codes and then converted into transmissible form. A radio transmitter 16 receives the signals produced from modulator 14 and transmits them through an antennal 18.

Regarding plural request/response opponents, i.e. network addresses of plural information providers, the system of this embodiment allows each user to access the same information provider franchised at a plurality of designated locations such as large cities. Thus, the user can choose the closest network address of the intended information provider through its receiving apparatus 20.

Of course, there are provided plural network addresses of different information providers dealing with different communication data. Each user can choose a desirable one of these plural network addresses to access each of the different information providers in accordance with the selected communication data through its receiving apparatus 20.

For example, in the TV shopping services, the primary communication data will include the detailed merchandise goods information constituted by sounds and video signals. On the other hand, the request/response control information could include telephone numbers of dealers, procedures for ordering the merchandised goods, acknowledged users' rights for the ordering, and costs incurred from the ordering.

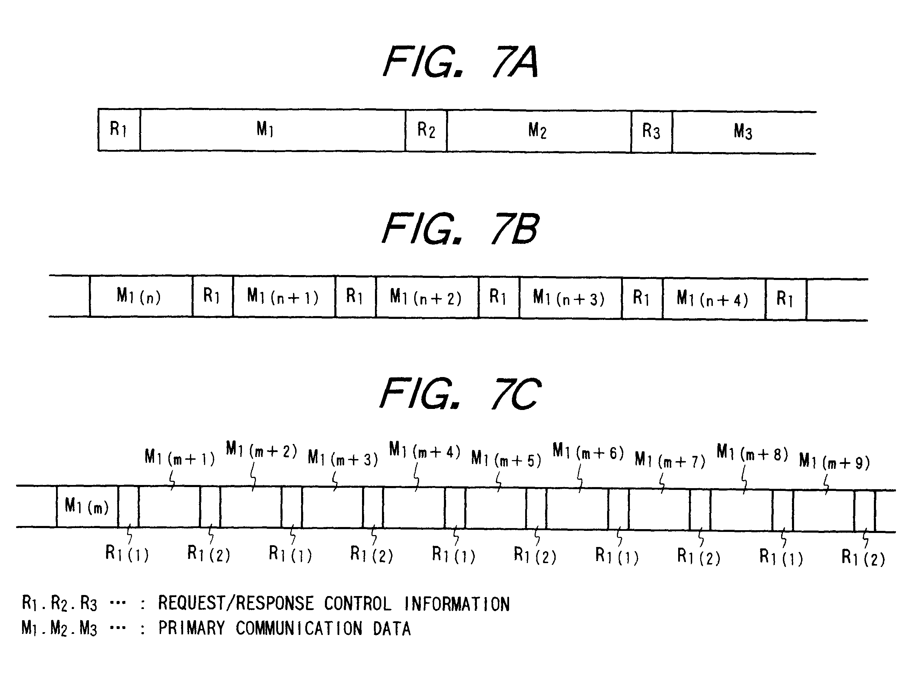

Figs. 7A through 7C show some methods for multiplexing the primary communication data with the request/response control information, each showing a predetermined allocation pattern for arranging primary communication data M1, M2, M3,---- and request/response control information R1, R2, R3, ----.

According to the method shown in Fig. 7A, each of the different request/response control information R1, R2, R3, --- is allocated directly in front of a corresponding one of the different primary communication data M1, M2, M3, ----. The transmission information amount will be slightly increased.

According to the method shown in Fig. 7B, each one (e.g. M1) of the different primary communication data M1, M2, M3,---is divided into a plurality of blocks having a predetermined size. The request/response control information R1 is interposed between separated blocks M1(n), M1(n+1), M1(n+2),---- of the corresponding primary communication data M1. This method is advantageous in that the request/response control information R1 can be received even if the reception of primary communication data M1 has not yet completed.

Furthermore, according to the method shown in Fig. 7C, each one (e.g. M1) of the different primary communication data M1, M2, M3,---- is divided into a plurality of blocks having a predetermined size, as well as the method shown in Fig. 7B. The request/response control information R1 is interposed between separated blocks M1(m), M1(m+1), M1(m+2),---- of the corresponding primary communication data M1.

This method is different from that of Fig. 7B in that the request/response control signal is also divided into a plurality of blocks R1(1), R1(2), R1(3),----. Hence, it becomes possible to shorten the transmission halt time derived from the multiplexing of primary communication data M1. It brings the merit that the buffer capacity required for compensating the transmission halt time of the reproduce & display unit equipped in the receiver apparatus can be reduced.

The radio signals transmitted from the transmitting apparatus 10 are received by a radio receiver 24 in the receiving apparatus 20. Then, the received radio signals are entered into a demodulator 26 and subjected to various processing for data transmission, such as reverse conversion of data, error detection and error correction. Thus demodulated transmission data are entered into a separator 28 and separated into primary communication data and request/response control information.

The primary communication data are transferred into a reproduce & display unit 30 and reproduced in accordance with a predetermined reproduction method and outputted as display signals to a TV monitor (not shown) so as to allow users to watch the provided information such as explanation for merchandised goods.

For example, when the primary communication data are constituted by compressed digital sounds and video signals, these information are thawed (expanded). More specifically, the sound data are converted into analog signals through a D/A converter (no shown) and then supplied to a speaker (not shown) to transmit the sound information to users. Meanwhile, the video signals are converted into analog signals and put sync signals, and then sent to the TV monitor to supply the video information to the users.

Regarding the compression and thawing method for the sounds and video information, it will be preferable to use ISO-11172 standards (so-called MPEG-1 standards) which has been already established as International Standards.

The separator 28 and the reproduce & display unit 30 are connected through bus 32 to a modem 34, a CPU (central processing unit) 36, a memory 38 and a user input unit 40. The modem 34 is connectable with an information provider 44 by means of the public telephone network 42.

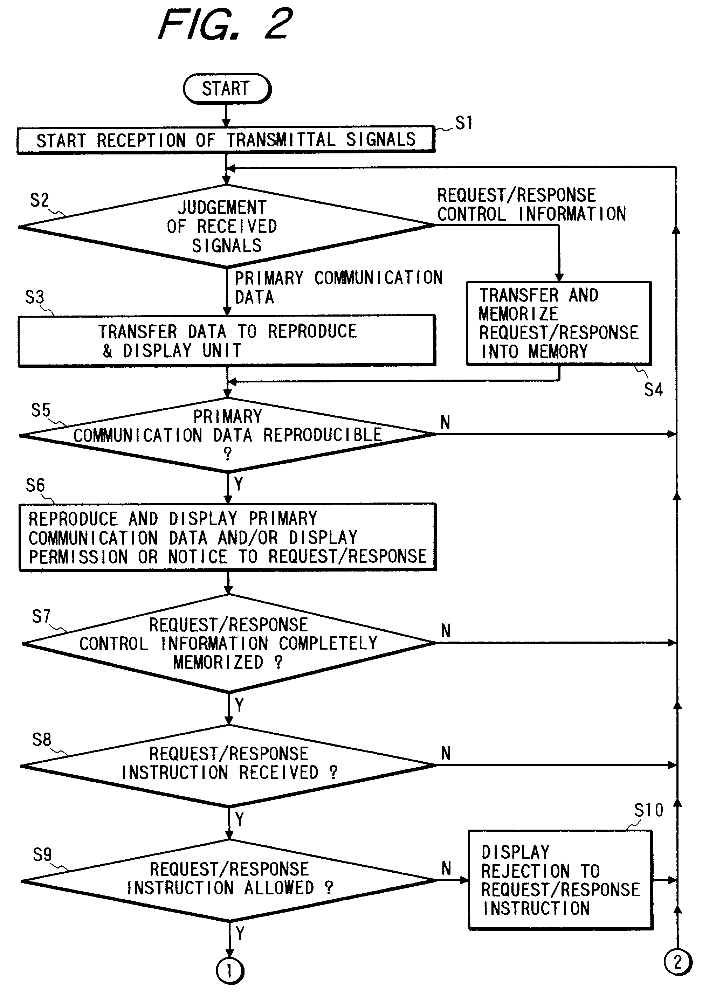

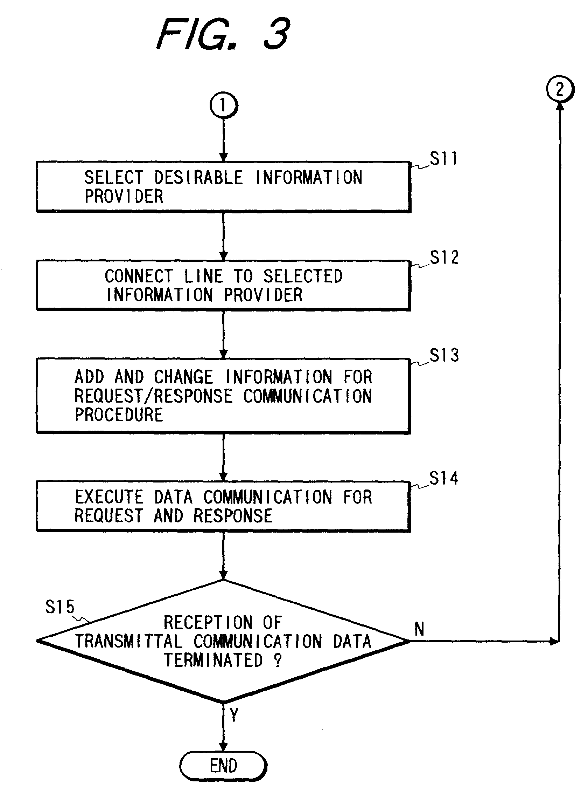

The operation of receiving apparatus 20, controlled by CPU 36, will be explained with reference to the flow charts shown in Figs. 2 and 3. After the reception of transmittal signals is started in a step S1, a judgement is made in a step S2 as to whether the received transmittal signals are primary communication data or request/response control information.

The primary communication data are transferred into reproduce & display unit 30 in a step S3, while the request/response control information are transferred into memory 38 in a step S4. Namely, the request/response control information are temporarily memorized in a predetermined region of memory 38 which is designated by the control of CPU 36.

Next, a judgement is made in a step S5 as to whether the primary communication data are reproducible. If the primary communication data are not reproducible, the control routine returns to the step S2. If the judgement is "YES" in the step S5, the reproduce & display unit 30 reproduces and displays the transmitted primary communication data, so that users can watch or listen the content of the transmitted primary communication data, such as detailed explanation of merchandised goods.

Meanwhile, in advance, the transmitting apparatus 10 adds the supplemental information including permission or notice for the request and response to the primary communication data. Alternatively, when the receiving apparatus 20 reproduces or displays the primary communication data, these permission or notice for the request and response are attached to the corresponding primary communication data based on the request/response control information. Thus, the reproduce & display unit 30 can provide these supplemental information to the users (Step S6).

Subsequently, it is checked in a step S7 whether the memorized request/response control information are completely, not partly, stored. When the step S7 judges that the request/response control information are not completely stored in memory 38, a series of processing including the reception of transmittal signals, separation of the received signals, reproduction & display of the primary communication data and memorization of request/response control information is repeated continuously until the request/response control information are completely memorized.

Next, the control routine proceeds to a step S8 to check whether any request/response instruction is received. When the user wants to request or respond to the information after acknowledging the permission or notice suggested, the user can input the request/response instruction through the user input unit 40, such as a keyboard. In response to this input operation, CPU 36 causes memory 38 to memorize the reception of such a request/response instruction in step S8.

When the request/response instruction is entered (i.e. "YES" in step S8), a judgement is made in a step S9 based on the request/response control information to check whether the user has the rights to request or respond. If the user is not authorized to request and respond (i.e. "NO" in step S9), the control routine proceeds to a step S10 to display the "rejection" to the user's request/response, thereby prohibiting unauthorized or unlawful access to the information (information providers).

After that, the control routine returns to the step S2 to repeat the above-described sequential processing including the reception of transmittal signals, separation of the received signals, reproduction & display of the primary communication data and memorization of request/response control information.

Regarding the judgement for checking whether each user has the rights to request or respond, it will be preferable to give an own ID (identification) information to the receiving apparatus 20. Meanwhile, each request/response control information describes therein all the ID data for discriminating or identifying each of receiving apparatus having the rights to request and respond. Thus, the judgement can be easily accomplished by comparing the ID information stored in each receiving apparatus 20 and the ID data involved in the transmittal request/response control information.

When the user has the rights to request and response (i.e. "YES" in step S9), the control routine proceeds to a step S11 to allow each user to choose one of network addresses (for example, telephone numbers) based on the request/response control information, each network address representing an information provider dealing with the object explained by the corresponding communication data, such as merchandised goods.

Then, the control routine proceeds to a step S12 to connect a line or access the intended information provider 44 through modem 34 and public telephone network 42 based on the selected network address.

Subsequently, in a step S13, if necessary, the line protocol information or the display information indicating the request/response procedure can be arbitrarily added or changed from the information provider.

Then, the control routine proceeds to a step S14 to execute the data communication for performing a necessary request/response processing. More specifically, in compliance with the line protocol information involved in the request/response control information, the user can perform the interactive data communication with the intended information provider. If the data communication is already progressing, the display information indicating the necessary request/response procedure is provided to the user in accordance with the progress of the data communication, thereby realizing the interactive data communication between each user and the intended information provider.

Regarding the method for selecting one of plural network addresses representing plural information providers, it will be possible to automatically select one network address which is most closet to the network address of the modem 34 of the user's receiving apparatus 20. Alternatively, for some requests or responses, it will be preferable to select a preferable one in accordance with the content of each request/response control information.

After finishing the data communication required for the request and response, a judgement is made in a step S15 to check whether the user wants to terminate this routine. If the user denies ("NO") in step S15, the control routine returns to step S2 to continue the sequential processing including the reception of transmittal signals, separation of the received signals, reproduction & display of the primary communication data, memorization of request/response control information and execution of request and response. If the answer is "YES" in step S15, this routine is ended.

In this embodiment, the network is not limited to the public telephone line only. For example, some of private information networks, such as Internet, or any other conventionally-known networks can be used for this embodiment. In this case, the domain names presently used in the Internet service have substantially the same function as the network addresses in the present embodiment. Thus, it should be understood that the request/response control information of the present invention can include these domain names too.

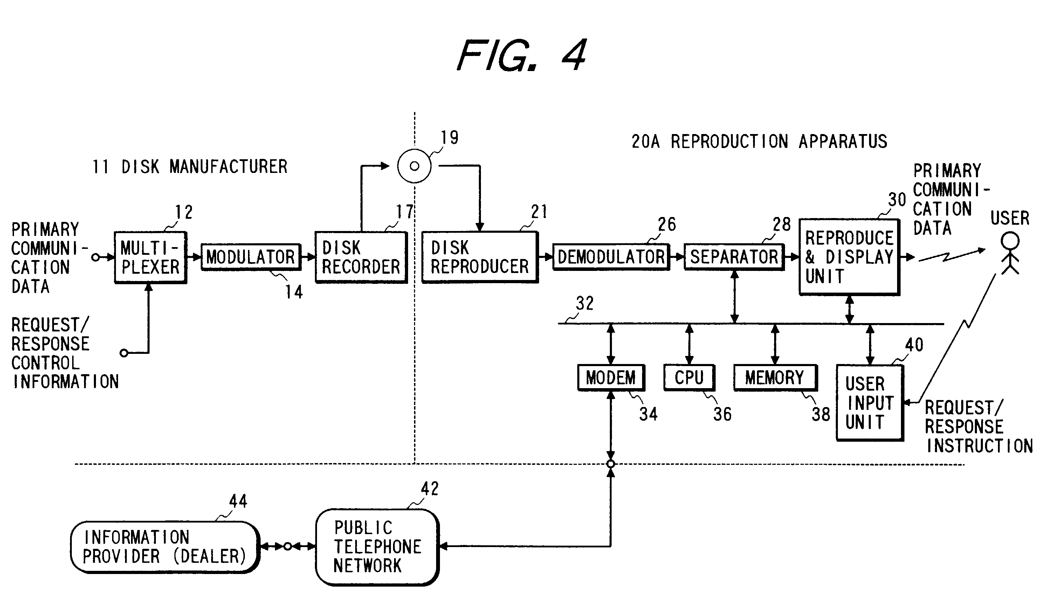

Next, with reference to Fig. 4, a second embodiment of the present invention will be explained. The second embodiment shown by the block diagram of Fig. 4 is a preferable data communication system consisting of a recording media (disk) manufacturer 11 and a reproducing apparatus 20A, which is also capable of realizing the information request/response method of the present invention.

The second embodiment is different from the first embodiment of Fig. 1 in that the second embodiment uses a package medium, such as a disk 19,, as an information transfer medium instead of the radio wave utilized in the first embodiment. More specifically, the radio transmitter 16 and the radio receiver 24 of Fig. 1 are replaced by a disk recorder 17 and a disk reproducer 21, respectively. Other components are substantially the same as those of the first embodiment already explained with reference to the block diagram of Fig. 1, and therefore denoted by the identical reference numerals.

More specifically, the disk manufacturer 11 has a multiplexer 12 which multiplexes primary communication data with request/response control information including at least network addresses of plural information providers. The data, thus multiplexed in the multiplexer 12, are sent to modulator 14 wherein these data are put error-correcting codes and then converted into recordable form. The disk recorder 17 receives the signals generated from modulator 14 and records them into the disk 19.

On the other hand, each user has the reproduction apparatus 20A which is a sort of computer terminal having data communication function. More specifically, the reproduction apparatus 20A comprises the disk reproducer 21 capable of reproducing the disk 19. The reproduced signals are entered into a demodulator 26 and subjected to various processing for data transmission, such as reverse conversion of data, error detection and error correction. Thus demodulated data are entered into a separator 28 and separated into primary communication data and request/response control information.

The primary communication data are transferred into a reproduce & display unit 30 and reproduced in accordance with a predetermined reproduction method and outputted as display signals to a TV monitor (not shown) so as to allow users to watch or listen the provided information such as explanation for merchandised goods.

The separator 28 and the reproduce & display unit 30 are connected through bus 32 to a modem 34, a CPU (central processing unit) 36, a memory 38 and a user input unit 40. The modem 34 is connectable with an information provider 44 by means of the public telephone network 42.

Regarding network addresses of plural information providers, the system of this embodiment also allows each user to access the same information provider franchised at a plurality of designated locations such as large cities. Thus, the user can choose the closest network address of the intended information provider through its reproduction apparatus 20A. Furthermore, there are provided plural network addresses of different information providers dealing with different communication data. Thus, each user can choose a desirable one of these plural network addresses to access each of the different information providers in accordance with the selected communication data through its reproduction apparatus 20A.

For example, the package media, such as disk 19, may be used in direct mail shopping services. In this case, disk 19 includes the primary communication data relating to the detailed merchandise goods information constituted by video signals possibly with sound signals. The disk 19 also includes various request/response control information, such as telephone numbers of dealers, procedures for ordering the merchandised goods, acknowledged users' rights for the ordering, and costs incurred from the ordering.

The primary communication data and the request/response control data constituting the recorded information can be multiplexed with each other in a predetermined pattern in accordance with any one of the methods shown in Figs. 7A through 7C in the same manner as the first embodiment.

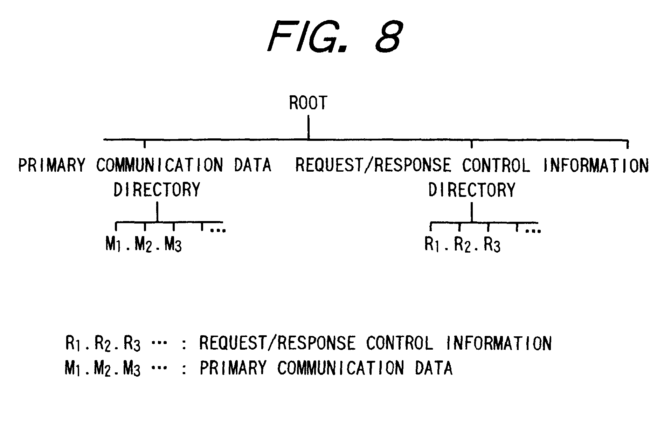

Alternatively, as shown in Fig. 8, a conventional disk administration method for computers can be utilized in this second embodiment. Namely, two directories can be produced on the disk. One directory is assigned to the primary communication data, while the other directory is assigned to the request/response control information. Thus, each information is memorized in the related directory and can be read out from the corresponding directory in response to the instruction from the user.

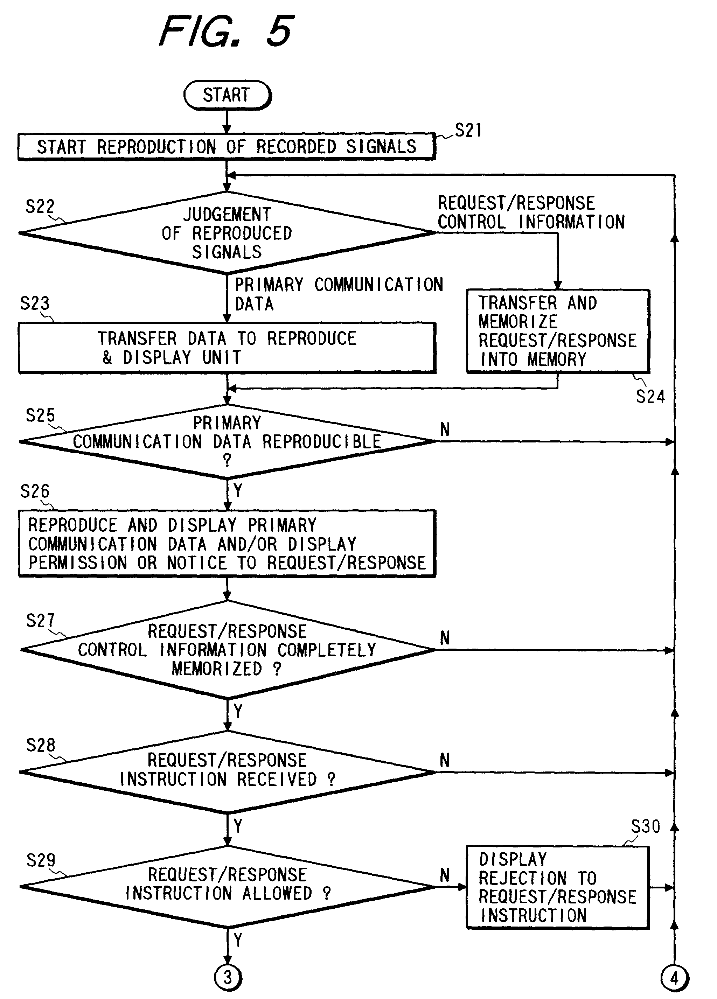

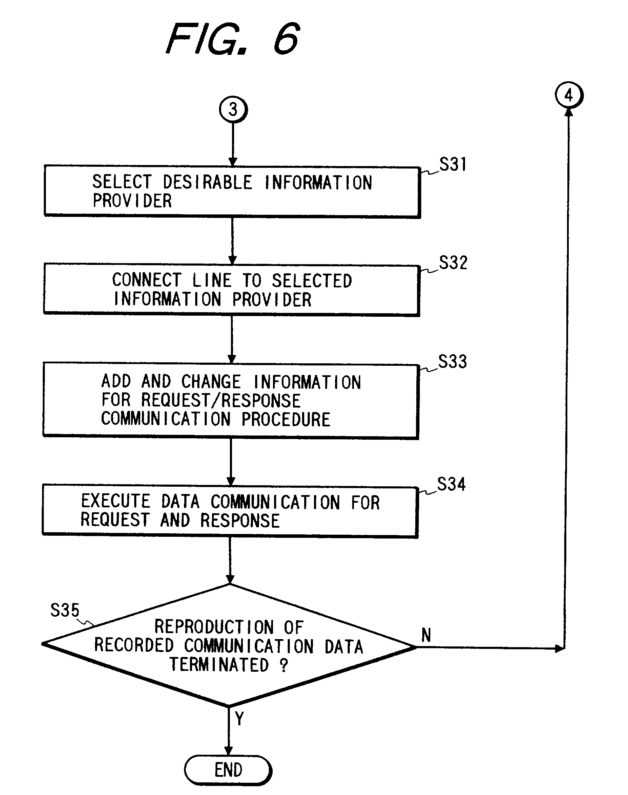

The operation of reproduction apparatus 20A, controlled by CPU 36, will be explained with reference to the flow charts shown in Figs. 5 and 6. After the reproduction of recorded signals is started in a step S21, a judgement is made in a step S22 as to whether the reproduced record signals are primary communication data or request/response control information.

The primary communication data are transferred into reproduce & display unit 30 in a step S23, while the request/response control information are transferred into memory 38 in a step S24. Namely, the request/response control information are temporarily memorized in a predetermined region of memory 38 which is designated by the control of CPU 36.

Next, a judgement is made in a step S25 as to whether the primary communication data are reproducible. If the primary communication data are not reproducible, the control routine returns to the step S22. If the judgement is "YES" in the step S25, the reproduce & display unit 30 reproduces and displays the reproduced primary communication data, so that users can watch or listen the content of the transmitted primary communication data, such as detailed explanation of merchandised goods.

Meanwhile, in advance, the disk manufacturer 11 adds the supplemental information including permission or notice for the request and response to the primary communication data. Alternatively, when the reproduction apparatus 20A reproduces or displays the primary communication data, these permission or notice for the request and response are attached to the corresponding primary communication data based on the request/response control information. Thus, the reproduce & display unit 30 can provide these supplemental information to the users (Step S26).

Subsequently, it is checked in a step S27 whether the memorized request/response control information are completely, not partly, stored. When the step S27 judges that the request/response control information are not completely stored in memory 38, a series of processing including the reproduction of recorded signals, separation of the reproduced signals, reproduction & display of the primary communication data and memorization of request/response control information is repeated continuously until the request/response control information are completely memorized.

Next, the control routine proceeds to a step S28 to check whether any request/response instruction is received. When the user wants to request or respond to the information after acknowledging the permission or notice suggested, the user can input the request/response instruction through the user input unit 40, such as a keyboard. In response to this input operation, CPU 36 causes memory 38 to memorize the reception of such a request/response instruction in step S28.

When the request/response instruction is entered (i.e. "YES" in step S28), a judgement is made in a step S29 based on the request/response control information to check whether the user has the rights to request or respond. If the user is not authorized to request and respond (i.e. "NO" in step S29), the control routine proceeds to a step S30 to display the "rejection" to the user's request/response, thereby prohibiting unauthorized or unlawful access to the information (information providers).

After that, the control routine returns to the step S22 to repeat the above-described sequential processing including the reproduction of recorded signals, separation of the reproduced signals, reproduction & display of the primary communication data and memorization of request/response control information.

As well as the first embodiment, it will be preferable to give an own ID (identification) information to the reproduction apparatus 20A to make a judgement as to whether each user has the rights to request or respond. Meanwhile, each request/response control information describes therein all the ID data for discriminating or identifying each of receiving apparatus having the rights to request and respond. Thus, the judgement can be easily accomplished by comparing the ID information stored in each reproduction apparatus 20A and the ID data involved in the reproduced request/response control information.

When the user has the rights to request and response (i.e. "YES" in step S29), the control routine proceeds to a step S31 to allow each user to choose one of network addresses (for example, telephone numbers) based on the request/response control information, each network address representing an information provider dealing with the object explained by the corresponding communication data, such as merchandised goods.

Then, the control routine proceeds to a step S32 to connect a line or access the intended information provider 44 through modem 34 and public telephone network 42 based on the selected network address.

Subsequently, in a step S33, if necessary, the line protocol information or the display information indicating the request/response procedure can be arbitrarily added or changed from the information provider.

Then, the control routine proceeds to a step S34 to execute the data communication for performing a necessary request/response processing. More specifically, in compliance with the line protocol information involved in the request/response control information, the user can perform the interactive data communication with the intended information provider. If the data communication is already progressing, the display information indicating the necessary request/response procedure is provided to the user in accordances with the progress of the data communication, thereby realizing the interactive data communication between each user and the intended information provider.

As well as the first embodiment, it will be possible to automatically select one network address which is most closet to the network address of the modem 34 of the user's receiving apparatus 20 to select one of plural network addresses. Alternatively, for some requests or responses, it will be preferable to select a preferable one in accordance with the content of each request/response control information.

After finishing the data communication required for the request and response, a judgement is made in a step S35 to check whether the user wants to terminate this routine. If the user denies ("NO") in step S35, the control routine returns to step S22 to continue the sequential processing including the reproduction of recorded signals, separation of the reproduced signals, reproduction & display of the primary communication data, memorization of request/response control information and execution of request and response. If the answer is "YES" in step S35, this routine is ended.

As well as the first embodiment, the second embodiment allows to use some of private information networks, such as Internet, or any other conventionally-known networks, besides the public telephone line.

Although the present invention is explained using the above-described two embodiments, the present invention can be practically utilized in the following examples.
1) Ordering and inquiries through the home shopping available on the broadcasting or by means of package media;
2) Permission and requirements to the copy of disk record or broadcasted video images, sounds and any other data;
3) Requirements to the communication programs handling the near video on demands broadcasting services; and
4) Reply to questionnaires on the disk record or the broadcasted video images, sounds and any other data.

As explained above, the present invention combines the primary communication data with corresponding request/response control information including at least network addresses of information providers in the recording or transmission of communication data. Then, the present invention lets users utilize such request/response control information in the reproduction or reception of the communication data anytime if the user wants to respond or request to the information provider. Thus, the users can easily and correctly connect a line to the network address of the intended information provider and execute the required request/respond processing for getting the intended communication objects such as merchandised goods.

Besides the network address information of the information provider to whom the user executes the request/response processing, the request/response control information can comprise at least one information selected from the group consisting of the procedure information for the request/response processing, rights information for the request/response processing, cost information incurred from the request/response processing, display information relating to permission or notice to user's request/response, and display information for instructing users to execute the request/response processing.

Providing such control information makes it possible for each user to realize a fine and accurate processing taking account of the nature or characteristics of each request and response, in the connection of the network line to the intended information provider and execution of the required request/response processing.

Furthermore, the request/response control information can comprise a plurality of network addresses representing information providers required in each request/response processing. Each user can select a preferable one among the plural network addresses in the reproduction or reception of communication data, and connect the line to the network address of the selected information provider, and execute the required request/response processing. Hence, it becomes possible to adaptively select a suitable information provider from the listed numerous providers, thereby reducing the costs for using the network and administrating individual requests and responses in accordance with their purposes.

As this invention may be embodied in several forms without departing from the spirit of essential characteristics thereof, the present embodiments as described are therefore intended to be only illustrative and not restrictive, since the scope of the invention is defined by the appended claims rather than by the description preceding them, and all changes that fall within metes and bounds of the claims, or equivalents of such metes and bounds, are therefore intended to be embraced by the claims.

## Claims

1. A data communication method for requesting and responding to information comprising:
a step of forming a communication signal given to a user by transmission (16, 18, 22, 24) or reproduction from a recording medium (19), said communication signal being a combination of request/response control information (R1, R2, R3,---) with primary communication data (M1, M2, M3,---), said request/response control information (R1, R2, R3,---) comprising information relating to network address of an information provider (44) to whom said user can request or respond regarding the content of said primary communication data (M1, M2, M3,---);
a step (S2; S22) of separating said request/response control information (R1, R2, R3,---) from said primary communication data (M1, M2, M3,---) when said communication signal is received or reproduced;
a step (S4; S24) of storing said separated request/response control information (R1, R2, R3,---) in a memory (38);
a step (S12; S32) of connecting a line to said network address of said information provider (44) using said stored request/response control information (R1, R2, R3,---) in response to a predetermined command signal entered by said user through an input means (40) to request or respond to said information provider (44); and
a step (S14; S34) of allowing said user to request or respond to said information provider (44) using said stored request/response control information (R1, R2, R3,---) after the line is connected to said information provider (44).

2. The data communication method defined by claim 1, wherein
said request/responsecontrol information (R1, R2, R3,--) comprises at least one information selected from the group consisting of procedure information for a request/response processing, rights information for the request/response processing, cost information incurred from the request/response processing, display information regarding permission or notice to user's request/response, and display information for instructing users to execute the request/response processing, and
said method further comprises an additional step (S8, S9; S28, S29) for performing a predetermined processing in accordance with said request/response control information (R1, R2, R3,---) when said user inputs said predetermined command signal through said input means (40) to request or respond to said information provider (44), said additional step (S8, S9; S28, S29) being performed before executing said step (S12; S32) of connecting the line to said network address of said information provider (44).

3. The data communication method defined by claim 1 or claim 2, wherein
said request/response control information (R1, R2, R3,--) comprises a plurality of network addresses of information providers (44) required in each request/response processing, and
said method further comprises another step (S11; S31) for selecting a preferable one among said plural network addresses in accordance with said request/response control information (R1, R2, R3,--) when said user inputs a predetermined command signal through said input means (40) to request or respond to said information provider (44), said another step (S11; S31) being performed before executing said step (S12; S32) of connecting the line to said network address of said information provider (44).

4. A data receiving apparatus for receiving a communication signal-given to a user by transmission (16, 18, 22, 24), said communication signal being a combination of primary communication data (M1, M2, M3,---) and request/response control information (R1, R2, R3,---), said request/response control information (R1, R2, R3,---) comprising information relating to network address of an information provider (44) to whom said user can request or respond regarding the content of said primary communication data (M1, M2, M3,---), said data receiving apparatus. (20) comprising:
separating means (28, 36) for separating said request/response control information (R1, R2, R3,---) from said primary communication data (M1, M2, M3,---) when said communication signal is received;
memory means (38) for storing said separated request/response control information (R1, R2, R3,---);
input means (40) for allowing said user to enter a predetermined command signal for requesting or responding to said information provider (44);
network control means (34, 36) for reading out said request/response control information (R1, R2, R3,---) from said memory means (38) and connecting a line to said network address of said information provider (44) using said readout request/response control information (R1, R2, R3,---) in response to said predetermined command signal entered through said input means (40); and
request/response means (36, 40) for allowing said user to request or respond to said information provider (44) using said stored request/response control information (R1, R2, R3,---) after the line is connected to said information provider (44).

5. A data reproduction apparatus for reproducing a communication signal given to a user through reproduction from a recording medium (19), said communication signal being a combination of primary communication data (M1, M2, M3,---) and request/response control information (R1, R2, R3,---), said request/response control information (R1, R2, R3,---) comprising information relating to network address of an information provider (44) to whom said user can request or respond regarding the content of said primary communication data (M1, M2, M3,---), said data reproduction apparatus (20A) comprising:
separating means (28, 36) for separating said request/response control information (R1, R2, R3,---) from said primary communication data (M1, M2, M3,---) when said communication signal is reproduced;
memory means (38) for storing said separated request/response control information;
input means (40) for allowing said user to enter a predetermined command signal for requesting or responding to said information provider (44);
network control means (34, 36) for reading out said request/response control information (R1, R2, R3,---) from said memory means (38) and connecting a line to said network address of said information provider (44) using said readout request/response control information (R1, R2, R3,---) in response to said predetermined command signal entered through said input means (40); and
request/response means (36, 40) for allowing said user to request or respond to said information provider (44) using said stored request/response control information (R1, R2, R3,---) after the line is connected to said information provider (44).
